# EUROPEAN PATENT SPECIFICATION

(11) **EP 1 741 302 B1**
(45) Date of publication and mention of the grant of the patent: **29.01.2014**
(21) Application number: 05738744.1
(22) Date of filing: 24.04.2005
(51) Int. Cl.: H04W 8/12

(54) **AD-HOC COMMUNICATION NETWORK AND METHOD**
AD-HOC-KOMMUNIKATIONSNETZ UND VERFAHREN
RESEAU ET PROCEDE DE COMMUNICATION AD-HOC

(30) Priority: 28.04.2004 GB 0409473
(43) Date of publication of application: 10.01.2007
(73) Proprietor: Motorola Solutions, Inc., Schaumburg IL 60196 (US)
(72) Inventor: THEISEN, Nanna Svane, 2600 Glostrup (DK); FRANDSEN, Svend, 2600G lostrup (DK); CHATER-LEA, David John, 2600 Glostrup (DK); PETERSEN, Steen, 2600 Glostrup (DK)
(74) Representative: Treleven, Colin
(86) International application number: PCT/US2005/014193
(87) International publication number: WO 2005/107281

(56) References cited:
- EP-A1- 1 251 710
- WO-A1-94/23506
- WO-A1-99/27734
- WO-A2-00/24216
- DE-C1- 4 417 779
- US-A- 6 154 646

## Description

### Field of the Invention

The invention relates to a system and a method of controlling location information of subscribers and in particular, but not exclusively, controlling location information of subscribers in a TETRA (TErrestrial Trunked RAdio) cellular communication system.

### Background of the Invention

- In a cellular communication system (like for example the Global System for Mobile communication (GSM) and TETRA (TErrestrial Trunked RAdio)), a geographical region is divided into a number of cells each of which is served by a base station. One base station, also termed as Base Transceiver Station (BTS) with a switching infrastructure is referred as a node of the network. The switching infrastructure supporting BTS may be shared with other BTSs. The system infrastructure in a TETRA system is generally referred to as a switching and management infrastructure (SwMI), which substantially contains all of the communication elements apart from the MSs. This includes base transceiver stations (BTSs) connected to a conventional public-switched telephone network (PSTN) through base station controllers (BSCs) and mobile switching centres (MSCs). In geographical terms reference to a node is a reference to an area served by one BTS, and in network terms reference to a node is a reference to one BTS and supporting it infrastructure. A remote unit referred also as subscriber or mobile station (MS) or communication unit is served via a radio communication link by the base station of the cell within which the remote unit is operating.

One of the basic advantages of the cellular communications systems is that subscriber may move from one geographical location to another one while receiving services from the network. To provide seamless service there are regions of overlapping coverage of two base stations. As the subscriber moves from area served by a first base station towards area served by a second base station it enters the region of overlapping coverage. Within the region of overlapping coverage the subscriber changes the serving base station. This is known as cell reselection or handover.

The communication link from a BTS to a subscriber is generally referred to as a downlink communication channel. Conversely, the communication link from a subscriber to a BTS is generally referred to as an up-link communication channel.

To enable communication between two handsets operating in two different cells a fixed network interconnects the base stations. The fixed network is operable to route data between any two base stations and this way allows for communication between these two remote handsets. In addition, the fixed network may comprise gateway functions for interconnecting to external networks such as the Public Switched Telephone Network (PSTN). This allows subscribers to communicate with landline telephones and other communication terminals connected by a landline. Additionally the fixed network is adapted to perform functions required for managing a conventional cellular communication network including routing data, admission control, resource allocation, subscriber billing, mobile station authentication etc.

The TETRA communications system may be used as a public cellular communication system. However its main target group are organizations or groups such as emergency services. Special functions and services implemented in the TETRA system make this system especially suitable for services like police, emergency, fire rescue or others. One of such features provided by TETRA system, which is especially useful for the emergency services is controlling group calls as well as managing the membership of these groups. Other features and services provided by TETRA include, push-to-talk channel allocation, broadcast calls etc. In addition to trunked mode operation wherein remote units communicate via a base station, TETRA provides for the possibility of communication directly between remote units without participation of the infrastructure. This is known as Direct Mode Operation (DMO).

One of the important issues related to providing communications in cellular networks is mobility management. Main goal of the mobility management is providing and keeping up-to-date the infrastructure with information on location of the subscribers (i.e. in which cell particular subscriber is operating).

Static networks solve the problem by storing location and provisioning information in the HLR. Nodes on the network have tables indicating which HLR contains subscriber provisioning and location information.

Controlling location information of subscribers in static networks, known in the art, is outlined in FIG. i. In a static network 100, a first Home Location Register 118 assigned to a first node 116 contains all configuration data and location information of subscribers 122 and 112 home to the first node 116 and a third HLR 106 assigned to a third node 104 contains all configuration data and location information of subscriber 110. The location information stored in the first HLR 118 (and in any other HLR in the system, i.e. 106 and 128) is a dynamic pointer that can point to any Visitor Location Register (VLR) 108, 120, 130 in the network 100. A first VLR 120 (assigned to the first node 116) keeps information about all subscribers 122 active in a first cell 114 (serviced by the first node 116) and keeps pointers to respective HLRs (i.e. HLRs being home to the subscribers active in the first cell 114). In practice, configuration data of a first subscriber 122 and a second subscriber 112 is kept in the first HLR 118. The first HLR 118 keeps also information about location of the first subscriber 122 and the second subscriber 112, which is active in a third cell 102, and therefore points 132 to a third VLR 108. And the third VLR 108 points 134 to the first HLR 118 as there the configuration data of the second subscriber 112 is stored.

Mobility management scheme used in static networks cannot be implemented in ad-hoc networks, due to the fact that if the HLR function would be assigned to a node of the network, there would be a risk that data stored in that HLR are not be available when such a node is unreachable or even removed from the network at any specific time.

Current ad-hoc networks (i.e. networks which are adapted to be reconfigured during operations) use approaches where the subscribers' provisioning is either distributed replicated) throughout the network, or is contained in some fixed server that is accessed to provide service characteristics. Mobility is handled by ad hoc tables (e.g. the dynamic nature of IP routing tables) where every node in the network either discovers where to route calls for that mobile, or by accessing to the fixed server in a similar way to fixed network operation. If any of this methods cannot be used a scattergun paging is sent out to find location of the mobile .

When a node is moved the users, whose service or location information resides in that node, will either not get service or get a non-complete service from other sites (as their configuration data is not accessible anymore). They may also lose service until the network is updated and (re) configured to the new topology in terms of both location and provisioning information for users. The reconfiguration of the network can take relatively long period of time, and unknown locations may only be solved by widespread paging.

A need therefore exists for a method of controlling location information of subscribers in a communications network, particularly when the network is required to be operational irrespective of reconfiguration processes, wherein the abovementioned disadvantages may be alleviated or overcome. WO 99/27734 (Ericsson) teaches extracting subscriber data from a first HLR for transfer to a second HLR for storage.

EP1251710 (Lucent Technologies) is concerned with *'the migration of subscribers from a network based on one technology to a network based on another technology.'* In '710, an individual subscriber may migrate from a first network to a second network based on an other technology, at some future point in time. The aim is to allow subscribers to migrate, without having to change their mobile telephone numbers. Calls from external networks are all routed to one gateway mobile switching centre (GMSC) which is in the 'second network'. A mobile subscriber can be reached if it is still in the first network, by the GMSC forwarding the call to the first network. If the subscriber has already migrated to the second network, the GMSC can forward the call directly to it in the second network, in the normal manner.

### Summary of the Invention

According to a first aspect of the present invention there is provided a method of controlling location information of subscribers in a wireless ad-hoc communications network in accordance with appended claim 1. The network comprises a plurality of nodes, wherein each of said nodes is provided with a Home Location Register (HLR) and each of said nodes is provided with a Visitor Location Register (VLR). When an operation of a first node is to be reconfigured by at least temporarily disconnecting the first node from the ad-hoc communications network, at least a part of records from a first HLR assigned to said first node are transferred to at least one second node out of the other nodes of the network, wherein the transferred at least part of the records are stored at the second node as an entirely separate Home Location Register, where another Home Location Register was previously already assigned to the second node.

The dependent method claims provide details of further embodiments of the method of the invention.

In one embodiment, the operation of a first node is reconfigured by disconnecting said first node from the network. In another embodiment the operation of a first node is reconfigured by physically moving the first node from one geographical location to another geographical location. In another embodiment the operation of a first node is reconfigured by adding a new node to the network.

After reconfiguration of the operation of the first node and transfer of said at least part of the records of the first HLR, VLRs in the network are updated with information where the records from the first HLR are transferred to.

In one embodiment, each of said nodes has a look-up table, which identifies correct HLR for every subscriber operating in the network and said nodes update said look-up tables with the changes in the HLRs.

The transfer of the records from the first HLR is controlled by a control unit, wherein the at least one of said other nodes is selected from a predefined list or using a selection algorithm. The records from the first HLR are transferred, based on a selection algorithm, to a node connected with said first node. The records from the first HLR are transferred to a second node, wherein said second node is selected based on speed of the connection between said first and second nodes, or bit error rate on said connection, or bandwidth of said connection, or geographical location of the second node, or any combination of these factors. Said control unit creates a back-up copy of said first HLR and transfers said first HLR to said second node using said back-up copy if an error occurred during said transfer from said first node to said second node.

In accordance with the invention, the records of said first HLR are assigned to a second node as a separate HLR, in addition to a second HLR that was assigned to said second node before said transfer.

In another embodiment said records of said first HLR are split into at least two separate sets of records and said separate sets of records are transferred to separate nodes.

In another alternative embodiment said records of said first HLR are split into at least two separate sets of records and one of said separate sets of records stays with said first node and remaining sets of records are transferred to separate nodes.

According to a second aspect of the present invention, there is provided a wireless ad-hoc communications network in accordance with appended claim 7. The wireless ad-hoc communications network comprises a plurality of nodes, forming with other elements of the network a switching and management infrastructure (SwMI). The network comprises also a plurality of subscribers. Each of the nodes is provided with a Home Location Register (HLR) and each of the nodes has a Visitor Location Register (VLR). In said network a first node is adapted to transfer at least a part of records from a first HLR assigned to said first node to at least a second one out of the other nodes of the network, when an operation of a first node is to be reconfigured by at least temporarily disconnecting the first node from the ad-hoc communications network. The second node is adapted to accept the records and store the records as an entirely separate Home Location Register, where another Home Location Register was previously already assigned to the second node.

The dependent method claims provide details of further embodiments of the wireless ad-hoc communications network of the invention.

In one embodiment said nodes are adapted to update said VLRs in the network with the information of where the records from the first HLR are transferred to. In one embodiment each of said nodes of the communications network has a look-up table, which identifies a correct HLR for every subscriber operating in the network and said nodes are adapted to update said look-up tables with the changes in the HLRs.

In one embodiment said network further contains a control unit adapted to control said transfer. Said control unit is adapted to create a back-up copy of said first HLR. Said control unit is further adapted to transfer the records of said first HLR using said back-up copy if an error occurred during said transfer from said first node to the second nodes of the network.

In accordance with the invention, the first node of said communications network is adapted to assign records of said first HLR to the second node of the network as a separate HLR, in addition to a HLR that was assigned to the second node before said transfer.

The benefits of the present invention are:
- The HLR is not static in its location, it can be moved around in the ad-hoc network as the network develops -thus ensuring that the network will always have continued access to the HLR configuration data for all users, even if the node holding their HLR is temporarily taken down or moved.
- The location-track-keeping and the update of the HLR in an ad-hoc network may be done automatically by the network when there is a change in network topology, thereby reducing the operating cost and making it more flexible in use.
- It allows for easy implementation of a wireless system which is dynamic in nature and with better performance, while still ensuring service to the users.
- The solution provides some aspects of a self-healing network.

### Brief description of the drawings

The present invention will be understood and appreciated more fully from the following detailed description taken in conjunction with the drawings in which:

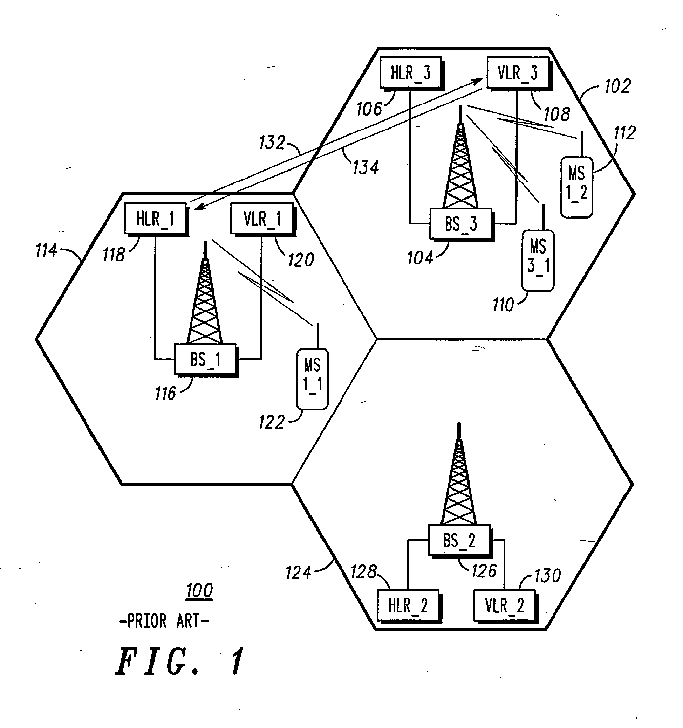

FIG. 1 is a diagram illustrating a method of controlling location information of subscribers in a wireless communication network known in the art,
FIG. 2 is a diagram illustrating a method of controlling location information of subscribers in a wireless communication network in accordance with one embodiment of the present invention,
FIG. 3 is a flow chart illustrating a method of controlling location information of subscribers in a wireless communication network in accordance with one embodiment of the present invention.

### Description of an embodiment of the invention

The term "Home Location Register" (HLR) herein below refers to a database containing configuration information and location information related to all subscribers home to a particular node or nodes. One HLR may cover more than one node.

The term ∼Visitor Location Register" (VLR) herein below refers to a database containing information on subscribers operating in a particular node and keeps pointers to respective HLRs (i.e. HLRs that are home for the subscribers listed in the VLR). Every node in the network has assigned a separate VLR.

The term "look-up table" herein below refers to a table which is copied into every node and divides the individual and group address space into blocks of numbers, then allocates each block to one of the nodes, i.e. identifies the correct HLR for each block of identities. As every node has the same table, if a subscriber (or group member) registers at any node, that node can immediately know which node contains the HLR for that subscriber (or group).

The following description focuses on an embodiment of the invention applicable to a TETRA cellular communication system. However, it will be appreciated that the invention is not limited to this application but may be applied to many other communication systems.

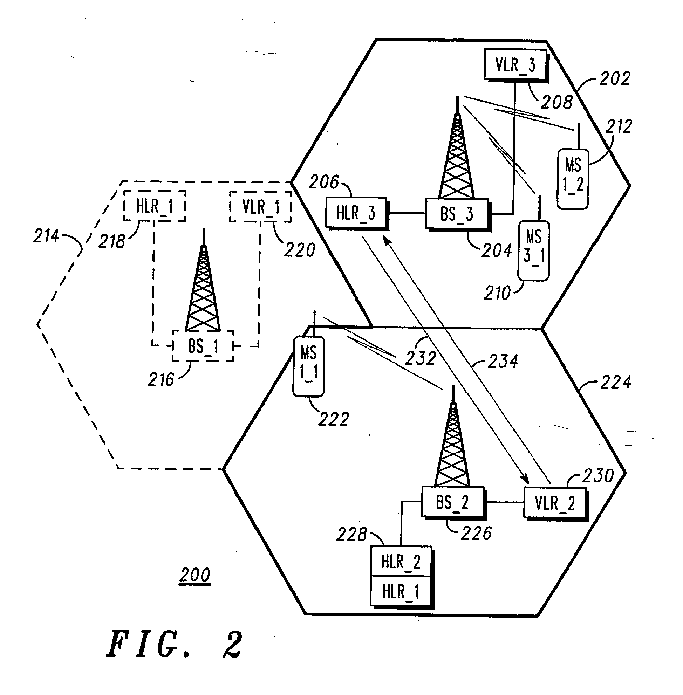

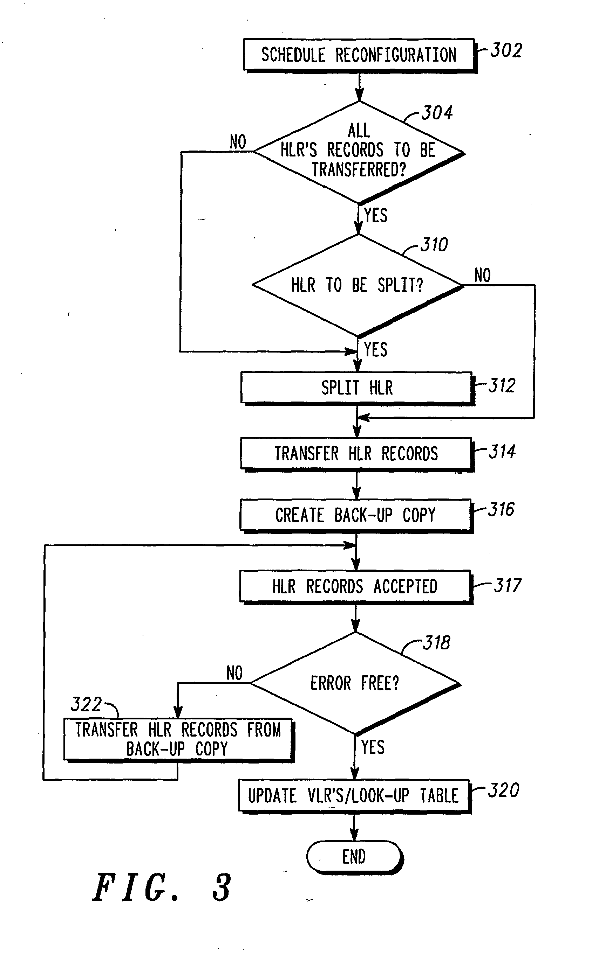

Referring to FIG. 2 and FIG. 3 one embodiment of a method of controlling location information of subscribers 210; 212, 222 in a wireless, ad-hoc communications network 200 according to the present invention is shown. In a wireless, ad-hoc communications network 200, which comprises a plurality of nodes 204; 216, 226, at least portion of said nodes are provided with Home Location Registers (HLRs) 206, 218, 228. In addition each of said nodes 204, 216, 226 has a Visitor Location Register (VLR) 208, 220, 230. Ad-hoc network 200 may be reconfigured by for example disconnecting one of the nodes 204, 216, 226 from the network 200 or by physically moving one or more of the nodes 204, 216, 226 to a different geographical location, or by adding a new node to the network 200.

To ensure seamless operation of the ad-hoc network 200 all configuration and location data assigned a node affected by said reconfiguration must be available during and after said reconfiguration.

Depending on the type of the reconfiguration (disconnecting, moving, adding) either all or only a part of the records stored in a first HLR 218 is to be transferred to other node (or nodes) 304.

In one embodiment, if a first node 216 is to be disconnected from the network 200, all records stored in a first HLR 218 must be transferred 314 to other nodes. It may be accomplished by splitting 310, 312 the records of the first HLR 218 into at least two sets of records and then transferring 314 them to two other nodes of the network 200. Alternatively, if the first HLR 218 is not to be split 310 all records of the first HLR 218 are transferred 314 to another node of the network 200.

A result of transferring records from the first HLR 218 is change of home node of the subscribers 212, 222 from the first node 216 to a second node 226. It means that after disconnecting of the first node 216 configuration and location data of subscribers 212 and 222 are stored in a HLR 228 assigned to the second node 226. In consequence to have the network 200 fully operational all VLRs in the network 200 must be updated 320 with the new location of data previously stored in the first HLR 218.

Otherwise they would point to HLR that does not exist.

Similarly the reconfiguration of the network and transferring of the first HLR 218 to a second node 226 modifies structure of a look-up table of the network. Look-up tables in the nodes of the network 200 are updated 320 with information where the records from the first HLR 218 are transferred to.

In operation, reconfiguration of the network and transferring data from one HLR to another is extremely complicated. Failure in transfer may lead to disconnecting some of the subscribers from being serviced and this in turn may have fatal consequences if the system was used at that time in an emergency operation. To minimize the risk of failure a control unit, which is part of the switching and management infrastructure (SwMI) is added to the network 200. For the sake of clarity of the drawings the SwMI and the control unit are not depicted on the figures. The control unit is responsible for scheduling 302 and control of the transfer of the records of the first HLR 218 from the first node 216 to the second node 226.

In one embodiment the control unit selects the target node (the node to which the records from the first HLR 218 are to be transferred) using a predefined list. Alternatively the control unit may select the target node using a selection algorithm. Said algorithm is designed to optimize the transfer process. The criteria used for selecting target node can be for example a bandwidth of the link between the first node 216 and the target node, or a bit error rate of the communication channel between these two nodes, or speed of connection between these two nodes, or geographical location of the target node or any combination of these factors.

The control unit in one embodiment of the present invention may schedule the transfer 314 of the records from the first HLR 218 to a second node. The records of said first HLR 218 are assigned to a second node as a separate HLR in addition to a second HLR that was assigned to said second node before said transfer. This solution is especially beneficial when said first node is temporarily disconnected from the network. Having two separate HLRs assigned to one node of the network it is possible to transfer back the first HLR (i.e. the HLR that was assigned to the first node before said reconfiguration).

After said transfer 314, the second node 226 confirms that the records have been received 317 and the second node 226 and the second HLR 228 check the received data against error 318. As the data are transferred in the form of a computer readable file, the check may be performed using a Cyclic Redundant Check (CRC) method known in the art. In another embodiment a checksum method can be used.

If an error has been detected 320 in the transferred records, the control unit initiates transfer of the records from a back-up copy 322. The back-up copy is created 316 by the control unit while the records are transferred from the first node 216 to the second HLR 228 assigned to the second node 226. Alternatively the back-up copy may be created during the step of scheduling 302 said reconfiguration.

When the records of the first HLR 218 are transferred without error all VLRs 208, 230 previously pointing to the first HLR 218 in the network 200 are updated with information where the records from the first HLR 218 are transferred to. Similarly the look-up tables in each of nodes 204, 226 are updated with the correct HLR for all moved subscribers.

As was mentioned above, the reconfiguration of the network may be realized by disconnecting a node from the network. Another kind of reconfiguration is moving a node from one geographical location to another geographical location. As moving a node requires the node to be temporarily disconnected from the network, the embodiment of the method for these two cases will the same (i.e. to ensure seamless operation of the network 200 all records stored in the HLR of node to be disconnected must be available for the subscribers and the SwMI after the reconfiguration).

The third type of reconfiguration is adding a new node to the network. In the simplest case it would not be necessary to transfer HLR's data from any of the nodes, but in some situations it can be beneficial to split 310, 312 the HLR assigned to one of the nodes and transfer one part of the split HLR to the newly added node. Splitting the HLR into two (or more) HLRs may be beneficial due to:
(i) performance -it is not necessary to access a remote HLR;
(ii) resilience -if the link to the remote HLR goes down, there is still full service available;
(iii) gateway access -the HLR may be used to specify local gateway access, etc.

With reference to FIG. 2 one embodiment of a wireless, ad-hoc communications network 200 is presented. For the sake of clarity part of the network 200 affected by reconfiguration (disconnected from the network as depicted on FIG. 2) is drawn with dotted lines. Said network 200 comprises:
(i) a plurality of nodes 216, 204, 226, forming with other elements of the network a switching and management infrastructure (SwMI); and
(ii) a plurality of subscribers 210, 212, 222 communicating with the nodes 216, 204, 226 on radio communications channels.
Communication from a remote unit to a base station is known as uplink, and communication from a base station to a remote unit is known as downlink. At least a portion of said nodes are provided with Home Location Registers (HLRs) 218, 206, 228 and each of said nodes has a Visitor Location Register (VLR) 220, 208, 230. When said network 200 is to be reconfigured said first node 216 is adapted to transfer records from a first HLR 218 assigned to said first node 216 to a second node 226, and said second node 226 is adapted to accept said records.

In one embodiment the network 200 comprises a control unit which is adapted to control said transfer. The control unit may be implemented in the form of software operating on one of the devices being a part of the SwMI. In another embodiment the control unit may be hardware implemented in a form of a separate unit operably connected to the SwMI. One of the tasks performed by the control unit is selection of the target node (a node where the records from the first HLR 218 are transferred to). For said selection, the control unit in the simplest case may use a list of target nodes or it can be done using a' selection algorithm. The criteria used by the algorithm are: a bandwidth or bit error rate of the connection between the first node 216 and the target node or a bit error rate of the communication channel between these two nodes, or speed of connection between these two nodes, or geographical location of the target node, or any combination of these factors.

The control unit is adapted to create a back-up copy of said first HLR 218. This copy is stored on a mass storage device, like for example a computer hard disk. If in the transmitted records of the first HLR an error is detected, said control unit is adapted to transfer said first HLR 218 using said back-up copy.

When the transfer of the HLR's records is completed and no transfer errors are reported said nodes 204, 226 are adapted to update said VLRs 208, 230 in the network 200 with the information where the records from the first HLR 218 are transferred to.

In one embodiment, each of the nodes 204, 216, 226 of the communications network 200 has a look-up table which lists all the subscribers operating in the network 200 and identifies the correct HLR for each of the subscribers. In consequence, with reconfiguration of the network 200 and changing the structure of HLRs by transferring records of the first HLR 218 to the second node 226, it is necessary to update said look-up table with the new subscriber-HLR distribution.

The invention can be implemented in any suitable form including hardware, software, firmware or any combination of these. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

## Claims

1. A method of controlling location information of subscribers (210, 212, 222) in a wireless, ad-hoc communications network (200) comprising a plurality of nodes (204,216,226),
wherein each of the nodes is provided with a Home Location Register (206, 218, 228) and each of the nodes (204, 216, 226) is provided with a Visitor Location Register (208, 220, 230),
the method comprising:
when an operation of a first node (216) is to be reconfigured by at least temporarily disconnecting the first node (216) from the ad-hoc communications network (200), transferring (314) at least a part of records from a first Home Location Register (218) assigned to the first node (216) to at least one second node (226) out of the other nodes (204, 226) of the network (200),
**characterised in that** the transferred at least part of the records are stored at the second node (226) as an entirely separate Home Location Register, where another Home Location Register was previously already assigned to the second node (226).

2. The method according to Claim 1, wherein reconfiguration comprises one of:
the first node (216) being temporarily disconnected from the network (200) and physically moved from one geographical location to another geographical location, and then reconnected to the network;
the first node (216) being permanently disconnected from the network (200) without a new node being reconnected to the network in its place; and
the first node (216) being permanently disconnected from the network, with a new node being added to the network (200) to take its place, without the new node having been previously connected to the ad-hoc communications network.

3. The method according to Claim 1 or Claim 2 further comprising:
updating Visitor Location Registers (208, 230) in the network (200) with information of where the records from the first Home Location Register (218) were transferred.

4. The method according to any previous Claim, wherein:
each of the nodes (204, 216, 226) has a look-up table that identifies the correct Home Location Register for every subscriber operating in the network (200);
the method further comprising the nodes updating the look-up tables with the changes in the Home Location Registers.

5. The method according to any previous Claim, wherein:
the second node (226) is selected based on one of a predefined list and a selection algorithm, and
the selection algorithm selects the second node (226) based on at least one of the factors of speed of the connection between the first (216) and second node (226), bit error rate on the connection, bandwidth of the connection, and geographical location of the second node (226).

6. The method according to any previous Claim, wherein:
the records of the first Home Location Register (218) are split (312) into at least two separate sets of records and the separate sets of records are each transferred (314) to separate nodes including the second node (226) and at least one other node.

7. A wireless, ad-hoc communications network (200) comprising a plurality of nodes (216,204,226), forming with other elements of the network a switching and management infrastructure (SwMI), and a plurality of subscribers (210, 212, 222), wherein each of the nodes is provided with a Home Location Register (218, 206, 228) and each of the nodes is provided with a Visitor Location Register (220,208,230), the network (200) being such that:
a first node (216) is adapted to transfer at least a part of records from a first Home Location Register (218) assigned to the first node (216) to at least a second one out of the other nodes (204, 226) of the network (200), when an operation of a first node (216) is to be reconfigured by at least temporarily disconnecting the first node (216) from the ad-hoc communications network (200); and
**characterised in that**:
the second node (226) is adapted to accept the records and store the records as an entirely separate Home Location Register, where another Home Location Register was previously already assigned to the second node (226).

8. The communication network (200) according to Claim 7, wherein:
the other nodes (204,226) are adapted to update the Visitor Location Registers (208, 230) in the network (200) with the information of where the records from the first Home Location Register (218) were transferred.

9. The communication network (200) according to claim 7 or claim 8, wherein:
each of the other nodes (204, 226) has a look-up table that identifies a correct Home Location Register for every subscriber operating in the network; and
the other nodes are adapted to update said look-up tables with the changes in the Home Location Registers.

10. The communication network (200) according to any one of claims 7 to 9, wherein:
the network further includes a control unit adapted to control the transfer.

11. The communication network (200) according to claim 10, wherein:
the control unit is adapted to create (316) a back-up copy of said first Home Location Register (218).

12. The communication network (200) according to claim 11, wherein:
the control unit is adapted to transfer the records of the first Home Location Register (218) using (322) the back-up copy if an error occurred during the transfer from the first node (216) to the second node (226) of the network.

## Patentansprüche

1. Verfahren zur Steuerung von Ortsinformationen von Teilnehmern (210, 212, 222) in einem drahtlosen Ad-Hoc-Kommunikationsnetzwerk (200), umfassend eine Vielzahl von Knoten (204, 216, 226),
wobei jeder der Knoten ein Heimortsregister (206, 218, 228) aufweist und jeder der Knoten (204, 216, 226) ein Besucherortsregister (208, 220, 230) aufweist,
wobei das Verfahren umfasst:
wenn ein Betrieb von einem ersten Knoten (216) durch zumindest eine temporäre Verbindungsunterbrechung des ersten Knotens (216) von dem Ad-Hoc-Kommunikationsnetzwerk (200) rekonfiguriert werden muss, ein Übertragen (314) zumindest eines Teils von Datensätzen von einem ersten Heimortsregister (218), das dem ersten Knoten (216) zugeordnet ist, an zumindest einem zweiten Knoten (226) aus den anderen Knoten (204, 226) des Netzwerks (200),
**dadurch gekennzeichnet, dass** der übertragene, zumindest eine Teil der Datensätze in dem zweiten Knoten (226) als ein vollkommen separates Heimortsregister gespeichert ist, wo zuvor ein anderes Heimortsregister schon dem zweiten Knoten (226) zugeordnet war.

2. Verfahren nach Anspruch 1, wobei Rekonfigurieren einen der folgenden Schritte umfasst:
der erste Knoten (216) wird temporär von dem Netzwerk (200) getrennt und physisch von einem geografischen Ort zu einem anderen geografischen Ort bewegt und dann mit dem Netzwerk wiederverbunden;
der erste Knoten (216) wird permanent von dem Netzwerk (200) getrennt, ohne dass ein neuer Knoten mit dem Netzwerk an seinem Platz wieder angeschlossenen wird; und
der erste Knoten (216) wird permanent von dem Netzwerk getrennt, wobei ein neuer Knoten dem Netzwerk (200) hinzugefügt wird, um seinen Platz zu übernehmen, ohne dass der neue Knoten vorher an das Ad-Hoc-Kommunikationsnetzwerk angeschlossen wurde.

3. Verfahren nach Anspruch 1 oder 2, ferner umfassend:
Aktualisieren von Besucherortsregistern (208, 230) in dem Netzwerk (200) mit Informationen darüber, woher die Datensätze von dem ersten Heimortsregister (218) transferiert wurden.

4. Verfahren nach einem der vorhergehenden Ansprüche, wobei:
jeder der Knoten (204, 216, 226) eine Look-Up-Tabelle aufweist, die das richtige Heimortsregister für jeden in dem Netzwerk (200) arbeitenden Teilnehmer identifiziert;
wobei das Verfahren ferner umfasst, dass die Knoten die Look-Up-Tabellen mit den Änderungen in den Heimortsregistern aktualisieren.

5. Verfahren nach einem der vorhergehenden Ansprüche, wobei:
der zweite Knoten (226) basierend auf einer vorbestimmten Liste und einem Auswahlalgorithmus ausgesucht ist, und
wobei der Auswahlalgorithmus den zweiten Knoten (226) basierend auf zumindest einem der Faktoren Geschwindigkeit der Verbindung zwischen dem ersten (216) und dem zweiten Knoten (226), Bitfehlerrate in der Verbindung, Bandbreite der Verbindung, und geografische Position des zweiten Knotens (226), auswählt.

6. Verfahren nach einem der vorhergehenden Ansprüche, wobei:
die Datensätze des ersten Heimortsregisters (218) aufgeteilt (312) sind in zumindest zwei separate Sätze von Datensätzen und die separaten Sätze von Datensätzen jeweils an separate Knoten, umfassend den zweiten Knoten (226) und zumindest einen anderen Knoten, transferiert (314) werden.

7. Ein drahtloses Ad-Hoc-Kommunikationsnetzwerk (200) umfassend eine Vielzahl von Knoten (216, 204, 226), das mit anderen Elementen des Netzwerks eine Schalter- und Management-Infrastruktur (SwMI) bildet, und eine Vielzahl von Teilnehmern (210, 212 , 222), wobei jeder der Knoten ein Heimortsregister (218, 206, 228) aufweist und wobei jeder der Knoten eines Besucherortsregisters (220, 208, 230) aufweist, wobei das Netzwerk (200) so ausgebildet ist, dass:
ein erster Knoten (216) geeignet ist, zumindest einen Teil von Datensätzen von einem ersten Heimortsregister (218), der dem ersten Knoten (216) zugeordnet ist, an zumindest einen Zweiten aus den anderen Knoten (204, 226) des Netzwerks (200) zu übertragen, wenn ein Betrieb des ersten Knotens (216) durch zumindest ein temporäres Trennen des ersten Knotens (216) von dem Ad-Hoc-Kommunikationsnetzwerk (200) rekonfiguriert werden soll; und
**dadurch gekennzeichnet, dass**
der zweite Konten (226) geeignet ist, Datensätze anzunehmen und die Datensätze als vollständig separate Heimortsregister zu speichern, wo ein anderes Heimortsregister zuvor schon dem zweiten Knoten (226) zugeordnet war.

8. Kommunikationsnetzwerk (200) nach Anspruch 7, wobei:
die anderen Knoten (204, 226) geeignet sind, die Besucherortsregister (208, 230) in dem Netzwerk (200) mit Informationen darüber, woher die Datensätze von dem ersten Heimortsregister (218) transferiert wurden, zu aktualisieren.

9. Kommunikationsnetzwerk (200) nach Anspruch 7 oder Anspruch 8, wobei:
jeder der andern Knoten (204, 226) eine Look-Up-Tabelle aufweist, die ein richtiges Heimortsregister für jeden in dem Netzwerk arbeitenden Teilnehmer identifiziert; und
wobei die anderen Knoten ausgebildet sind, um die Look-Up-Tabellen mit den Änderungen in den Heimortsregistern zu aktualisieren.

10. Kommunikationsnetzwerk (200) nach einem der Ansprüche 7 bis 9, wobei:
das Netzwerk ferner eine Steuereinheit umfasst, die ausgebildet ist, den Transfer zu steuern.

11. Kommunikationsnetzwerk (200) nach Anspruch 10, wobei:
die Steuereinheit ausgebildet ist, eine Sicherheitskopie des ersten Heimortsregisters (218) zu erzeugen (316).

12. Kommunikationsnetzwerk (200) nach Anspruch 11, wobei:
die Steuereinheit ausgebildet ist, die Datensätze des ersten Heimortsregisters (218) unter Nutzung (322) der Sicherheitskopie zu übertragen, wenn ein Fehler während der Übertragung von dem ersten Knoten (216) zu dem zweiten Knoten (226) des Netzwerks aufgetreten ist.

## Revendications

1. Procédé de commande d'informations de localisation d'abonnés (210, 212, 222) dans un réseau de communication ad-hoc sans fil (200) comprenant une pluralité de noeuds (204, 216, 226),
dans lequel chacun des noeuds est doté d'un Registre de Localisation Nominal (206, 218, 228) et chacun des noeuds (204, 216, 226) est doté d'un Registre de Localisation des Visiteurs (208, 220, 230),
le procédé comprenant :
lorsqu'un fonctionnement d'un premier noeud (216) doit être reconfiguré par la déconnexion au moins temporaire du premier noeud (216) d'avec le réseau de communication ad-hoc (200), le transfert (314) d'au moins une partie des enregistrements d'un premier Registre de Localisation Nominal (218) attribué au premier noeud (216) vers au moins un deuxième noeud (226) parmi les autres noeuds (204, 226) du réseau (200),
**caractérisé en ce que** :
l'au moins une partie des enregistrements transférée est stockée au sein du deuxième noeud (226) sous la forme d'un Registre de Localisation Nominal entièrement séparé, un autre Registre de Localisation Nominal ayant déjà été précédemment attribué au deuxième noeud (226).

2. Procédé selon la revendication 1, dans lequel la reconfiguration comprend l'une des situations suivantes :
le premier noeud (216) est temporairement déconnecté du réseau (200) et physiquement déplacé d'une localisation géographique à une autre localisation géographique, puis reconnecté au réseau ;
le premier noeud (216) est déconnecté de manière permanente du réseau (200) sans qu'un nouveau noeud soit reconnecté au réseau à sa place ; et
le premier noeud (216) est déconnecté de manière permanente du réseau, avec un nouveau noeud ajouté au réseau (200) pour prendre sa place, sans que le nouveau noeud ait été précédemment connecté au réseau de communication ad-hoc.

3. Procédé selon la revendication 1 ou la revendication 2, comprenant en outre :
la mise à jour des Registres de Localisation des Visiteurs (208, 230) dans le réseau (200) avec des informations concernant l'endroit où les enregistrements du premier Registre de Localisation Nominal (218) ont été transférés.

4. Procédé selon l'une quelconque des revendications précédentes, dans lequel :
chacun des noeuds (204, 216, 226) a une table de correspondance qui identifie le bon Registre de Localisation Nominal pour chaque abonné opérant sur le réseau (200) ;
le procédé comprenant en outre le fait que les noeuds mettent à jour les tables de correspondances avec les changements survenus dans les Registres de Localisation Nominaux.

5. Procédé selon l'une quelconque des revendications précédentes, dans lequel :
le deuxième noeud (226) est sélectionné en fonction de l'un d'une liste prédéfinie et d'un algorithme de sélection, et
l'algorithme de sélection sélectionne le deuxième noeud (226) en fonction d'au moins l'un des facteurs de vitesse de la connexion entre le premier (216) et le deuxième noeud (226), taux d'erreur sur les bits sur la connexion, bande passante de la connexion, et localisation géographique du deuxième noeud (226).

6. Procédé selon l'une quelconque des revendications précédentes, dans lequel :
les enregistrements du premier Registre de Localisation Nominal (218) sont subdivisés (312) en au moins deux ensembles d'enregistrements distincts et les ensembles d'enregistrements distincts sont chacun transférés (314) à des noeuds distincts, incluant le deuxième noeud (226) et au moins un autre noeud.

7. Réseau de communication ad-hoc sans fil (200) comprenant une pluralité de noeuds (216, 204, 226) formant avec d'autres éléments du réseau une infrastructure de commutation et de gestion (SwMI), et une pluralité d'abonnés (210, 212, 222), dans lequel chacun des noeuds est doté d'un Registre de Localisation Nominal (218, 206, 228) et chacun des noeuds est doté d'un Registre de Localisation des Visiteurs (220, 208, 230), le réseau (200) étant tel que :
un premier noeud (216) est apte à transférer au moins une partie des enregistrements d'un premier Registre de Localisation Nominal (218) attribué au premier noeud (216) vers au moins un deuxième des autres noeuds (204, 226) du réseau (200), lorsqu'un fonctionnement d'un premier noeud (216) doit être reconfiguré par la déconnexion au moins temporaire du premier noeud (216) d'avec le réseau de communication ad-hoc (200) ; et
**caractérisé en ce que** :
le deuxième noeud (226) est apte à recevoir les enregistrements et à stocker les enregistrements sous la forme d'un Registre de Localisation Nominal entièrement séparé, un autre Registre de Localisation Nominal ayant déjà été précédemment attribué au deuxième noeud (226).

8. Réseau de communication (200) selon la revendication 7, dans lequel :
les autres noeuds (204, 226) sont aptes à mettre à jour les Registres de Localisation des Visiteurs (208, 230) dans le réseau (200) avec les informations concernant l'endroit où les enregistrements du premier Registre de Localisation Nominal (218) ont été transférés.

9. Réseau de communication (200) selon la revendication 7 ou la revendication 8, dans lequel :
chacun des autres noeuds (204, 226) a une table de correspondance qui identifie un bon Registre de Localisation Nominal pour chaque abonné opérant sur le réseau ; et
les autres noeuds sont aptes à mettre à jour lesdites tables de correspondance avec les changements survenus dans les Registres de Localisation Nominaux.

10. Réseau de communication (200) selon l'une quelconque des revendications 7 à 9, dans lequel :
le réseau comprend en outre une unité de commande apte à commander le transfert.

11. Réseau de communication (200) selon la revendication 10, dans lequel :
l'unité de commande est adaptée pour créer (316) une copie de secours dudit Registre de Localisation Nominal (218).

12. Réseau de communication (200) selon la revendication 11, dans lequel :
l'unité de commande est apte à transférer les enregistrements du premier Registre de Localisation Nominal (218) à l'aide (322) de la copie de secours si une erreur s'est produite pendant le transfert du premier noeud (216) vers le deuxième noeud (226) du réseau.
